# DEMANDE DE BREVET EUROPEEN

(11) **EP 0 884 921 A1**
(43) Date de publication de la demande: **16.12.1998**
(21) Numéro de dépôt: 98401359.9
(22) Date de dépôt: 08.06.1998
(51) Int. Cl.: H04Q 7/38

(54) **Transmission du canal d'informations pilotes de chaque opérateur dans un système de radiocommunications avec des stations mobiles**

(30) Priorité: 09.06.1997 FR 9707099
(71) Demandeur: ALCATEL ALSTHOM COMPAGNIE GENERALE D'ELECTRICITE, 75008 Paris (FR)
(72) Inventeur: Bursztejn, Jacques, 92200 Neuilly sur Seine (FR); Kumar, Vinod, 75005 Paris (FR); Fratti, Marco, 78100 Saint-Germain-En-Laye (FR); Balech, Jean-Pierre, 92160 Antony (FR)
(74) Mandataire: Laroche, Danièle

(57) **Abrégé**

L'invention concerne un système de radiocommunication avec des stations mobiles, du type permettant à un ou plusieurs opérateurs de réseau de gérer chacun un réseau distinct (1, 2). Chaque réseau est constitué de cellules géographiques (10, 11, 20, 21) et est parcouru par les stations mobiles (MS). Chaque cellule d'un réseau donné est associée à une station de base (BTS1, BTS2, BTS1', BTS2') par l'intermédiaire de laquelle peuvent communiquer celles des stations mobiles qui se trouvent dans la cellule et qui sont abonnées auprès de l'opérateur gérant le réseau donné. Chaque opérateur émet, dans son réseau, un canal d'informations pilotes fournissant à chaque station mobile des informations pilotes lui permettant notamment de se faire enregistrer auprès du réseau.

Selon l'invention, le système comprend un super-réseau (3) constitué de super-cellules géographiques (30, 31) associées chacune à une super-station de base (S-BTS1, S-BTS2). Chaque super-station de base comprend des moyens d'émission d'un signal d'information portant le canal d 'informations pilotes du ou de chacun des opérateurs. En outre, chaque station mobile (MS) comprend des moyens de réception et de traitement dudit signal d'information, de façon à en extraire le canal d'informations pilotes de l'opérateur auprès duquel elle est abonnée.

## Description

Le domaine de l'invention est celui des systèmes de radiocommunication cellulaires avec des mobiles, et notamment, mais non exclusivement, ceux conçus selon le standard de radiotélécommunication public GSM.

Par standard GSM, on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne la transmission du canal pilote de chaque opérateur dans un système de radiocommunication avec des stations mobiles.

D'une façon générale, un système de radiocommunication cellulaire permet à un ou plusieurs opérateurs de réseau de gérer chacun un réseau distinct. Dans le cas d'une pluralité de réseaux, une même zone peut être couverte par des réseaux d'opérateur distincts.

Chaque réseau est constitué de cellules géographiques et est parcouru par les stations mobiles. Chaque cellule d'un réseau donné est associée à une station de base par l'intermédiaire de laquelle peuvent communiquer celles des stations mobiles qui se trouvent dans la cellule et qui sont abonnées auprès de l'opérateur gérant le réseau donné.

Chaque opérateur émet, dans la zone de couverture de son réseau, un canal d'informations pilote fournissant à chaque station mobile des informations pilotes lui permettant notamment de se faire enregistrer (log-on) auprès du réseau, après avoir décodé diverses informations système concernant notamment l'identité de l'opérateur fournissant la couverture, les services disponibles, les porteuses à utiliser. etc.

La qualité de couverture d'un réseau du point de vue du canal d'informations pilotes peut être apprécié notamment sur la base des critères suivants :
- le temps nécessaire à une station mobile pour se faire enregistrer initialement auprès du réseau ;
- le spectre total nécessaire pour un réseau ;
- la compatibilité avec des évolutions futures du réseau et/ou des services ;
- le débit sortant d'informations ; et
- les délais d'émission.

Traditionnellement. chaque opérateur réserve sur l'ensemble de son réseau plusieurs porteuses radio pour l'émission de son canal d'informations pilotes. Chaque cellule possède son propre canal d'informations pilotes qui est porté par une porteuse particulière, dite porteuse BCCH, cette dernière étant émise à puissance constante par la station de base associée à cette cellule.

Pour son enregistrement initial auprès du réseau de son opérateur. via une des stations de base de ce réseau, la station mobile commence par balayer toutes les porteuses radio du spectre alloué afin de repérer. parmi celles qui sont des porteuses BCCH, celle qu'elle reçoit avec la puissance maximale. En effet. on considère que la porteuse BCCH reçue avec la puissance maximale est celle émise par la station de base associée à la cellule dans laquelle se trouve la station mobile. Puis la station mobile lit les informations pilotes (notamment celles qui vont lui permettre d'accéder au réseau) fournies par le canal pilote porté par cette porteuse BCCH.

Ainsi, dans le cas du GSM, la station mobile peut être obligée à balayer les 125 porteuses existantes et sélectionne les 6 reçues avec le maximum de puissance. Puis elle vérifie que la première des 6 porteuses sélectionnées est une porteuse BCCH en cherchant des informations pilotes transmises uniquement par les porteuses BCCH. Si la première porteuse sélectionnée n'est pas une porteuse BCCH. la station de base passe à la porteuse sélectionnée suivante, et recommence la même opération. et ce jusqu'à avoir une porteuse BCCH et les informations pilotes que celle-ci transporte.

Enfin, grâce aux informations pilotes lues, elle peut faire une demande d'accès sur le canal d'accès aléatoire (RACH), dans le but de se faire enregistrer auprès du réseau de son opérateur.

Cette technique actuelle de transmission du canal d'informations pilotes de chaque opérateur présente plusieurs inconvénients.

Tout d'abord, du fait de la nécessité du balayage de toutes les porteuses possibles, le temps d'accès au réseau par une station mobile est relativement long.

Un autre inconvénient est que chaque opérateur doit décider, indépendamment des autres opérateurs et tant au niveau micro-cellulaire que macro-cellulaire, des niveaux d'émission et des plans de réutilisation dans les différentes cellules de l'ensemble des porteuses BCHH qui lui sont allouées. Cette spécificité au niveau opérateur rend les évolutions futures difficiles à réaliser.

Enfin. la qualité de la couverture en limite des cellules n'est pas suffisante.

L'invention a notamment pour objectif de pallier ces différents inconvénients de l'état de la technique.

Plus précisément, l'un des objectifs de la présente invention est de fournir un système de radiocommunication avec lequel la transmission du canal d'informations pilotes de chaque opérateur soit optimisée par rapport à la solution actuelle précitée.

L'invention a également pour objectif de fournir une telle technique de transmission des canaux d'infonnations pilotes qui permette de réduire le temps d'enregistrement (log-on) d'une station mobile auprès du réseau de son opérateur.

Un autre objectif de l'invention est de fournir une telle technique de transmission des canaux d'informations pilotes qui permette de simplifier la gestion de l'allocation de porteuses entre les différents opérateurs.

Un objectif complémentaire de l'invention est de faciliter, du point de vue de la transmission des canaux d'informations pilotes, l'arrivée de nouveaux opérateurs et/ou de nouveaux services dans un même système de radiocommunication.

Encore un autre objectif de l'invention est de permettre une amélioration de la couverture radio.

Ces différents objectifs. ainsi que d'autres qui apparaîtront par la suite, sont atteints selon l'invention à l'aide d'un système de radiocommunication avec des stations mobiles, du type permettant à un ou plusieurs opérateurs de réseau de gérer chacun un réseau distinct, chaque réseau étant constitué de cellules géographiques et étant parcouru par lesdites stations mobiles,
chaque cellule d'un réseau donné étant associée à une station de base par l'intermédiaire de laquelle peuvent communiquer celles desdites stations mobiles qui se trouvent dans ladite cellule et qui sont abonnées auprès de l'opérateur gérant ledit réseau donné.
chaque opérateur émettant, dans son réseau, un canal d'informations pilotes fournissant à chaque station mobile des informations pilotes lui permettant notamment de se faire enregistrer auprès dudit réseau,
caractérisé en ce qu'il comprend
- un super-réseau constitué de super-cellules géographiques associées chacune à une super-station de base, chaque super-station de base comprenant des moyens d'émission d'un signal d'information portant le canal d'informations pilotes du ou de chacun des opérateurs, et chaque station mobile comprenant des moyens de réception et de traitement dudit signal d'information. de façon à en extraire le canal d'informations pilotes de l'opérateur auprès duquel elle est abonnée,
- des moyens de multiplexage des canaux d'informations pilotes des différents opérateurs sur ledit signal d'information.

Le principe général de l'invention consiste donc à mettre en oeuvre un réseau séparé. dit super-réseau. pour la transmission du ou des canaux d'informations pilotes sur un même signal d'information.

Ainsi, pour son enregistrement initial auprès du réseau de son opérateur, la station mobile n'a pas à balayer toutes les fréquences radio du spectre alloué avant de pouvoir lire le contenu du canal d'informations pilotes de son opérateur. En effet, il suffit à la station mobile, quelle que soit sa position dans le super-réseau, de recevoir le signal d'information et d'en extraire le canal d'informations pilotes de son opérateur.

D'autre part, chaque super-station de base émet un signal d'information obtenu par multiplexage des canaux d'informations pilotes des différents opérateurs.

Par ailleurs, la gestion de la transmission des canaux d'informations pilotes peut être centralisée, et donc optimisée.

De plus, l'arrivée d'un nouvel opérateur est de cette façon plus facile à gérer puisqu'il suffit d'ajouter son canal d'informations pilotes au sein du signal d'information émis par chaque super-cellule.

On notera que dans le cas de l'invention, le canal d'informations pilotes de chaque opérateur est homogène par super-cellule, alors que dans le cas classique, il est homogène par cellule.

De façon avantageuse, lesdites informations pilotes fournies par le canal d'informations pilotes de chaque opérateur, par l'intermédiaire d'un signal d'information émis par une super-station de base donnée, appartiennent au groupe comprenant :
- une information sur l'identité dudit opérateur ;
- une information de présence ou d'absence dudit opérateur dans la super-cellule associée à ladite super-station de base donnée ;
- une information sur l'allocation de canal dans le réseau dudit opérateur ;
- une information sur l'identité de la zone de localisation correspondant à ladite super-cellule donnée ;
- une information sur les services disponibles dans le réseau dudit opérateur :
- une informations sur la ou les porteuses, BCCH et/ou autres, utilisées dans la ou les cellules correspondant à ladite super-cellule donnée.

Il est clair que chaque canal d'informations pilotes ne contient pas obligatoirement toutes ces informations pilotes. Par ailleurs. cette liste d'informations pilotes n'est pas exhaustive.

Préférentiellement, les moyens de multiplexage mettent en oeuvre un multiplexage temporel et/ou fréquentiel et/ou par codage.

Dans un mode de réalisation avantageux de l'invention, ledit signal d'information est émis sur une porteuse unique pour toutes les super-stations de base.

De cette façon. les moyens de réception et de traitement du signal d'information, compris dans chaque station de base, sont très simples et peu coûteux.

Préférentiellement, ledit signal d'information est émis sur une porteuse en utilisant la technique OFDM.

Ainsi, on bénéficie de tous les avantages liés à la technique de multiplexage en fréquences orthogonal (ou OFDM, pour "Orthogonal Frequency Division Multiplex"). à savoir notamment une meilleure résistance aux distorsions par multi-trajets en Canal mobile, et une sélection intelligente des fréquences à utiliser.

Dans un mode de réalisation particulier de l'invention, ledit super-réseau utilise au moins partiellement un réseau de type DAB ou DVB.

On peut notamment utiliser la capacité de transmission encore disponible dans un réseau existant de diffusion audio-numérique (ou DAB, pour "Digital Audio Broadcasting") ou un réseau existant de diffusion vidéo-numérique (ou DVB, pour "Digital Video Broadcasting") existant.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente une vue schématique partielle d'un système de radiocommunication selon l'invention ; et
- la figure 2 présente une structure particulière du signal d'information portant différents canaux d'informations pilotes.

L'invention concerne donc un système de radiocommunication avec des stations mobiles, du type pennettant à un ou plusieurs opérateurs de réseau de gérer chacun un réseau distinct, chaque réseau étant constitué de cellules géographiques et étant parcouru par les stations mobiles.

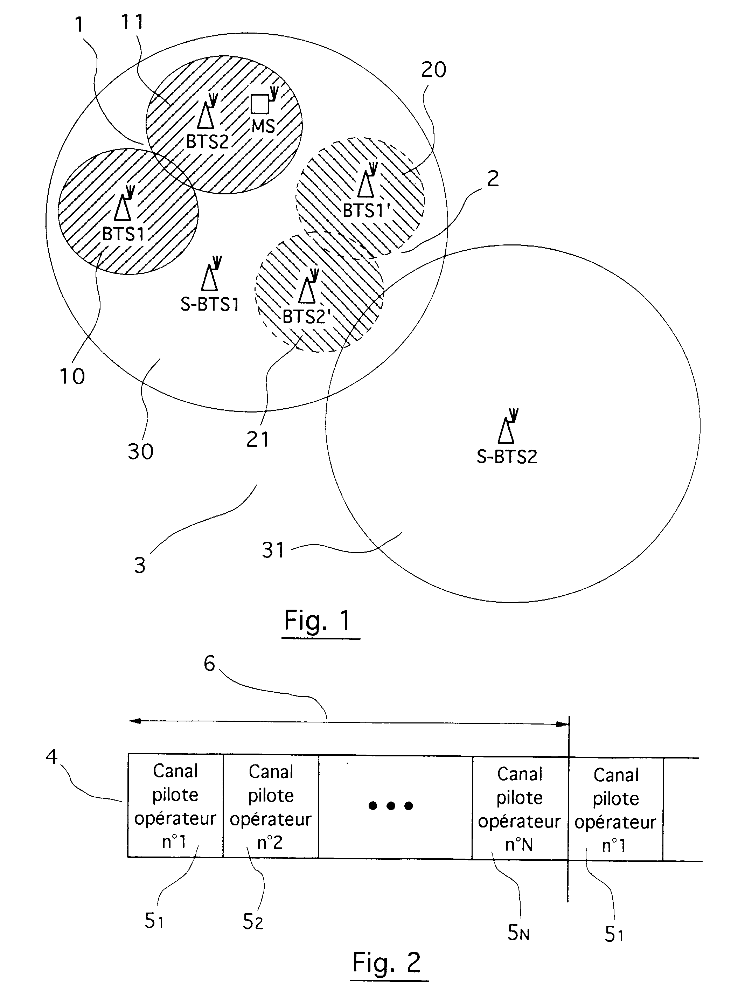

Sur la vue schématique partielle de la figure 1, dans un souci de simplication, on a considéré le cas où le système est partagé par deux réseaux d'opérateur distincts 1, 2. L'homme du métier saura aisément généraliser à un nombre quelconque de réseaux d'opérateur.

Pour chacun de ces réseaux 1, 2, on a représenté uniquement deux cellules 10, 11 et 20, 21. Il est clair que dans la réalité, chaque réseau comprend un grand nombre de cellules de façon à couvrir la surface la plus grande possible.

Chaque cellule 10, 11, 20, 21 est associée à une station de base BTS1, BTS2, BTS1', BTS2' par l'intermédiaire de laquelle peuvent communiquer celles des stations mobiles qui se trouvent dans la cellule et qui sont abonnées auprès de l'opérateur gérant le réseau donné.

Ainsi, avec l'exemple de la figure 1, la station mobile référencée MS qui se trouve dans la cellule référencée 11 peut communiquer via la station de base référencée BTS2 si elle est abonnée auprès de l'opérateur du réseau référencé 1.

Sur la figure 1, les zones de couverture des deux réseaux 1. 2 sont disjointes. Il est clair cependant que de façon tout à fait classique, deux réseaux d'opérateur peuvent assurer la couverture d'une même zone.

On rappelle que chaque opérateur doit émettre, dans son réseau, un canal d'informations pilotes fournissant à chaque station mobile des informations pilotes lui permettant notamment de se faire enregistrer auprès de ce réseau.

Selon la présente invention, le système de radiocommunication comprend un super-réseau 3 spécifique à cette transmission des canaux d'informations pilotes des différents opérateurs.

Ce super-réseau 3 est constitué de super-cellules géographiques 30, 31. associées chacune à une super-station de base S-BTS1, S-BTS2. Chaque super-station de base S-BTS1, S-BTS2 comprend des moyens d'émission d'un signal d'information portant le canal d'informations pilotes de chacun des opérateurs.

En d'autres termes, le signal d'information porte autant de canaux d'informations pilotes qu'il y a d'opérateurs à se partager le système de radiocommunication. La structure de ce signal d'information est unique pour toutes les super-cellules.

En revanche, il est clair que le canal d'informations pilotes d'un même opérateur fournit des informations différentes d'une super-cellule à l'autre. On comprend en effet que la nature des informations pilotes qu'un opérateur met dans son canal d'informations pilotes dépend directement de la super-cellule concernée, notamment du fait que ces informations peuvent indiquer la présence ou l'absence de l'opérateur dans cette super-cellule, ou encore du fait que ces informations peuvent fournir des indications sur les porteuses (BCCH et/ou autres) utilisées dans les cellules correspondant à cette super-cellule.

Sans pour autant que celle-ci soit exhaustive, on fournit ci-dessous une liste d'informations pilotes fournies par le canal d'informations pilotes de chaque opérateur, par l'intermédiaire d'un signal d'information émis par une super-station de base donnée :
- une information sur l'identité de l'opérateur ;
- une information de présence ou d'absence de l'opérateur dans la super-cellule associée à la super-station de base donnée ;
- une information sur l'allocation de canal dans le réseau de l'opérateur ;
- une information sur l'identité de la zone de localisation correspondant à la super-cellule donnée ;
- une information sur les services disponibles dans le réseau de l'opérateur ;
- une informations sur la ou les porteuses, BCCH et/ou autres, utilisées dans la ou les cellules correspondant à la super-cellule donnée.

Sur la figure 1, on a représenté uniquement deux super-cellules 30, 31. Il est clair que dans la réalité, le super-réseau 3 comprend un grand nombre de super-cellules de façon à couvrir au moins la surface de l'ensemble des réseaux d'opérateurs. En d'autres termes, l'ensemble des super-cellules 30, 31 du super-réseau 3 couvre sensiblement la même surface que l'ensemble des cellules 10, 11. 20, 21 des différents réseaux d'opérateur 1, 2.

Il est clair qu'un opérateur peut n'être présent que dans certaines des super-cellules. De même, plusieurs opérateurs peuvent être présents dans une même super-cellule.

On notera qu'une super-cellule 30, 31 peut être soit plus grande qu'une cellule (et dans ce cas couvrir plusieurs cellules 10, 11, 20, 21 d'un même réseau, comme c'est le cas sur la figure 1). soit plus petite (et dans ce cas couvrir seulement une portion d'une cellule d'un même réseau).

Egalement selon la présente invention. chaque station mobile MS comprend des moyens de réception et de traitement du signal d'information émis par la super-station de base associée à la super-cellule dans laquelle elle se trouve, de façon à en extraire le canal d'informations pilotes de l'opérateur auprès duquel elle est abonnée.

Afin de construire le signal d'information à émettre dans chaque super-cellule. chaque opérateur doit fournir au super-réseau, par exemple à un contrôleur de super-stations de base, les informations pilotes à transmettre dans son canal d'informations pilotes. Ensuite, pour chaque super-cellule. les canaux d'informations pilotes des différents opérateurs sont multiplexés de façon à être tous portés par le signal d'information émis dans cette super-cellule.

Ce multiplexage des canaux d'informations pilotes des différents opérateurs est par exemple un multiplexage temporel (TDM). Ainsi, la figure 2 présente une structure particulière du signal d'information 4 portant un multiplex temporel de différents canaux d'informations pilotes. Dans cet exemple, le multiplex peut comporter jusqu'à N canaux d'informations pilotes distincts. La séquence temporel 6 comprend donc N intervalles de temps successifs 5₁ à 5_{N}.

Il est clair que d'autres types de multiplexage peuvent être envisagés. mutliplexage fréquentiel (FDM) ou par codage (CDM) notamment, ou encore une combinaison de ces différents types de multiplexage.

Le super-réseau 3 utilise par exemple partiellement un réseau existant de type DAB (ou DVB), et le signal d'infonnation 4 est émis sur une porteuse unique, et identique pour toutes les super-cellules, en utilisant la technique OFDM.

On présente maintenant deux modes de fonctionnement du super-réseau selon l'invention, qui se distinguent sur le rôle du super-réseau après qu'une station mobile a pris connaissance du canal d'informations pilotes de son opérateur.

Dans le premier mode de réalisation. le rôle du super-réseau se borne à communiquer à chaque station mobile. via le signal d'information 4 émis dans chaque super-cellule, le canal d'informations pilotes de son opérateur.

Dans ce cas, dans chaque super-cellule, chaque canal pilote fournit notamment à la station mobile des informations concernant les porteuses BCCH utilisées dans les cellules correspondant à cette super-cellule. Ainsi, chaque station mobile, après avoir reçu le canal pilote de son opérateur et détecté la présence de ce dernier :
- sélectionne l'une des porteuses BCCH que lui indique son opérateur à travers le canal d'informations pilotes. afin de déterminer avec quelle station de base elle doit communiquer,
- envoie un message d'accès sur le canal RACH de voie montante de la porteuse BCCH sélectionnée, afin de se faire enregistrer auprès du réseau de son opérateur.

Dans le second mode de réalisation, le super-réseau gère en outre l'établissement d'un appel entre la station mobile et le réseau de son opérateur. Pour cela la station mobile se signale auprès du super-réseau, puis y reste accrochée ( par exemple tant qu'un appel n'est pas établi ou sur toute autre commande du super-réseau). Le super-réseau assure, de façon transparente pour la station mobile, un tel établissement d'appel dans le réseau d'opérateur de cette station mobile.

Dans ce cas, chaque station mobile comprend des moyens d'émission d'un signal d'accès (équivalent d'un burst RACH) destiné à la super-station de base associée à la super-cellule dans laquelle se trouve cette station mobile. Ainsi, chaque station mobile, après avoir reçu le canal pilote de son opérateur et détecté la présence de ce dernier, envoie un signal d'accès afin de se faire enregistrer auprès du super-réseau.

Chaque super-station de base comprend des moyens de réception de ce signal d'accès. Le super-réseau comprend des moyens d'enregistrement de toutes les stations mobiles qui ont fait parvenir un tel signal d'accès à une super-station de base. Le super-réseau comprend en outre des moyens de gestion de l'établissement d'un appel, une station mobile enregistrée auprès du super-réseau ne basculant sur le réseau de son opérateur qu'après qu'un appel a effectivement été établi dans le réseau d'opérateur, ou sur toute autre commande du super-réseau, ou encore en cas de transfert intercellulaire (handover) entre une zone couverte par le super-réseau et une zone non-couverte par le super-réseau.

## Revendications

1. Système de radiocommunication avec des stations mobiles, du type permettant à plusieurs opérateurs de réseau de gérer chacun un réseau distinct (1, 2), chaque réseau étant constitué de cellules géographiques (10, 11, 20, 21) et étant parcouru par lesdites stations mobiles (MS).
chaque cellule d'un réseau donné étant associée à une station de base (BTS1. BTS2, BTS1', BTS2') par l'intermédiaire de laquelle peuvent communiquer celles desdites stations mobiles qui se trouvent dans ladite cellule et qui sont abonnées auprès de l'opérateur gérant ledit réseau donné,
chaque opérateur émettant, dans son réseau, un canal d'informations pilotes fournissant à chaque station mobile des informations pilotes lui permettant notamment de se faire enregistrer auprès dudit réseau.
caractérisé en ce qu'il comprend
- un super-réseau (3) constitué de super-cellules géographiques (30, 31) associées chacune à une super-station de base (S-BTS1, S-BTS2), chaque super-station de base comprenant des moyens d'émission d'un signal d'information (4) portant le canal d'informations pilotes du ou de chacun des opérateurs, et chaque station mobile (MS) comprenant des moyens de réception et de traitement dudit signal d'information (4), de façon à en extraire le canal d'informations pilotes de l'opérateur auprès duquel elle est abonnée
- des moyens de multiplexage des canaux d'informations pilotes des différents opérateurs sur ledit signal d'information (4).

2. Système selon la revendication 1, caractérisé en ce que lesdites informations pilotes fournies par le canal d'informations pilotes de chaque opérateur, par l'intermédiaire d'un signal d'information (4) émis par une super-station de base donnée, appartiennent au groupe comprenant :
- une information sur l'identité dudit opérateur ;
- une information de présence ou d'absence dudit opérateur dans la super-cellule associée à ladite super-station de base donnée ;
- une information sur l'allocation de canal dans le réseau dudit opérateur ;
- une information sur l'identité de la zone de localisation correspondant à ladite super-cellule donnée ;
- une information sur les services disponibles dans le réseau dudit opérateur ;
- une informations sur la ou les porteuses, BCCH et/ou autres, utilisées dans la ou les cellules correspondant à ladite super-cellule donnée.

3. Système selon la revendication 1 ou 2, caractérisé en ce que lesdits moyens de multiplexage mettent en oeuvre un multiplexage temporel (TDM) et/ou fréquentiel (FDM) et/ou par codage (CDM).

4. Système selon l'une quelconque des revendications 1 à 3. caractérisé en ce que ledit signal d'information (4) est émis sur une porteuse unique pour toutes les super-stations de base.

5. Système selon la revendication 4, caractérisé en ce que ledit signal d'information (4) est émis sur une porteuse en utilisant la technique OFDM.

6. Système selon l'une quelconque des revendications 1 à 5, caractérisé en ce que ledit super-réseau (3) utilise au moins partiellement un réseau de type DAB ou DVB.

7. Système selon l'une quelconque des revendications 1 à 6, caractérisé en ce que chaque station mobile comprend en outre des moyens d'émission d'un signal d'accès destiné à la super-station de base associée à la super-cellule dans laquelle se trouve ladite station mobile,
en ce que chaque super-station de base comprend des moyens de réception dudit signal d'accès,
en ce que ledit super-réseau comprend des moyens d'enregistrement des stations mobiles qui ont fait parvenir un signal d'accès à une super-station de base.
